# EUROPEAN PATENT APPLICATION

(11) **EP 3 605 788 A1**
(43) Date of publication of application: **05.02.2020**
(21) Application number: 18770386.3
(22) Date of filing: 19.03.2018
(51) Int. Cl.: H02J 13/00, G06Q 50/06, B60L 11/18, H02J 3/32, H02J 3/38

(54) **AGGREGATION SYSTEM, METHOD FOR CONTROLLING SAME, AND COMPLEX POWER CONVERSION DEVICE**

(30) Priority: 23.03.2017 JP 2017058258
(71) Applicant: Hitachi, Ltd., Tokyo 100-8280 (JP); IKS Co., Ltd., Kyoto-shi, Kyoto 604-0857 (JP)
(72) Inventor: KOBAYASHI, Hideki, Tokyo 100-8280 (JP); TAKAYAMA, Mitsumasa, Tokyo 100-8280 (JP); HIRAOKA, Kouichi, Tokyo 100-8280 (JP); FUJIKI, Yuji, Tokyo 100-8280 (JP); IMAI, Takashi, Kyoto-shi Kyoto 604-0857 (JP)
(74) Representative: MERH-IP Matias Erny Reichl Hoffmann Patentanwälte PartG mbB
(86) International application number: PCT/JP2018/010897
(87) International publication number: WO 2018/174027

(57) **Abstract**

Provided is an aggregation system comprising a hybrid power conditioning system which manages, as a control target, a plurality of electric power units having a different response speed of a charge or a discharge, and respectively controls a charge or a discharge of the control target and an input/output of power, to and from a system, based on the charge or the discharge of the control target, and a server apparatus which generates a control order related to a demand response to the hybrid power conditioning system, wherein the server apparatus calculates an allocation amount of each of the users according to at least an amount of power to be procured, and sends, to the hybrid power conditioning system, the control order including the calculated allocation amount and a control mode prescribing a discharge source or a charge destination when a triggering condition is satisfied, wherein, upon receiving the control order, each of the hybrid power conditioning systems activates each of the control targets in order from the control target having a fastest response speed, controls a charge or a discharge by each of the activated control targets according to the control mode, and controls an input/output of power, to and from the system, based on the charge or the discharge of each of the activated control targets according to the allocation amount designated in the control order.

## Description

### TECHNICAL FIELD

The present invention relates to an aggregation system and its control method, and to a hybrid power conditioning system and, for example, can be suitably applied to an aggregation system in which an aggregator, in response to a request from an electric power provider or the like, controls the input/output of power to and from the system of each user.

### BACKGROUND ART

In recent years, pursuant to the popularization of photovoltaics and electric vehicles (hereinafter sometimes referred to as an "EV"), and storage batteries, a concept known as a VPP (Virtual Power Plant), which effectively uses the power generated by power users of independent houses, buildings and commercial facilities in addition to the power supplied from power generation business operators, is becoming widespread.

A VPP refers to a concept of integrating a plurality of small private power generation equipment; for instance, private power generation equipment of companies, domestic photovoltaics, and built-in storage batteries of electric vehicles, and controlling these power sources as though they are a single power generation plant.

In recent years, there are VPP business operators (hereinafter referred to as the "aggregators") that conclude a demand response contract with a plurality of power users (hereinafter simply referred to as the "users"), and, in response to a demand response request from the electric power provider or the like, controls the charge/discharge of electric power units capable of power storage or power generation such as the storage batteries or electric vehicles, photovoltaics, fuel cell power generation equipment and gas power generation equipment owned by the respective users.

In the foregoing case, an aggregator acquires necessary information from each user, such as the capacity and power generation of the electric power unit owned by that user, selects the necessary electric power unit of the necessary user according to a demand response request from the electric power provider based on the foregoing information, controls the operation of such electric power unit, and thereby suppresses or increases the power consumption.

Note that PTL 1 discloses consolidating the attribute information of electric vehicles in electric vehicle equipment, providing the consolidated attribute information to an aggregation system via electric vehicle station equipment, and estimating the available power capacity based on the attribute information of each electric vehicle.

### CITATION LIST

### PATENT LITERATURE

[PTL 1] Japanese Patent No. 5905836

### SUMMARY OF THE INVENTION

### PROBLEMS TO BE SOLVED BY THE INVENTION

Meanwhile, in a system where the aggregator controls the charge/discharge of the electric power unit of each user according to a demand response request from the electric power provider as described above (hereinafter referred to as the "aggregation system"), it is necessary to stand by in a state where the timing of a demand response request being triggered is unknown during the effective term of the demand response contract. However, if the storage battery of an electric vehicle is constantly in a standby state, standby power will be required, and power will be used wastefully. Thus, the storage battery will have to wait in a stopped state. When the storage battery waits in a stopped state, in order to discharge or charge the storage battery of the electric vehicle after a control instruction is issued, it is necessary to confirm the status of the insulated state before causing the storage battery to be in a connected state, and there is a problem in that it is not possible to quickly handle a demand response, which is demanded of a fast response.

The present invention was devised in view of the foregoing points, and an object of this invention is to propose an aggregation system and its control method, and a hybrid power conditioning system, capable of promptly handling a demand response.

### MEANS TO SOLVE THE PROBLEMS

In order to achieve the foregoing object, the present invention provides an aggregation system, comprising: a hybrid power conditioning system which is provided to each user and manages, as a control target, a plurality of electric power units having a different response speed of a charge or a discharge, and respectively controls a charge or a discharge of the control target and an input/output of power, to and from a system, based on the charge or the discharge of the control target; and a server apparatus which generates a control order related to a demand response to the hybrid power conditioning system of each of the users, wherein the server apparatus calculates an allocation amount of each of the users according to at least an amount of power to be procured, and sends, to the hybrid power conditioning system of each of the users, the control order including the calculated allocation amount and a control mode prescribing a discharge source or a charge destination when a triggering condition is satisfied, wherein, upon receiving the control order, each of the hybrid power conditioning systems activates each of the control targets in order from the control target having a fastest response speed, controls a charge or a discharge by each of the activated control targets according to the control mode, and controls an input/output of power, to and from the system, based on the charge or the discharge of each of the activated control targets according to the allocation amount designated in the control order.

### ADVANTAGEOUS EFFECTS OF THE INVENTION

According to the present invention, it is possible to realize an aggregation system and its control method, and a hybrid power conditioning system, capable of promptly handling a demand response.

### BRIEF DESCRIPTION OF DRAWINGS

[Fig. 1]

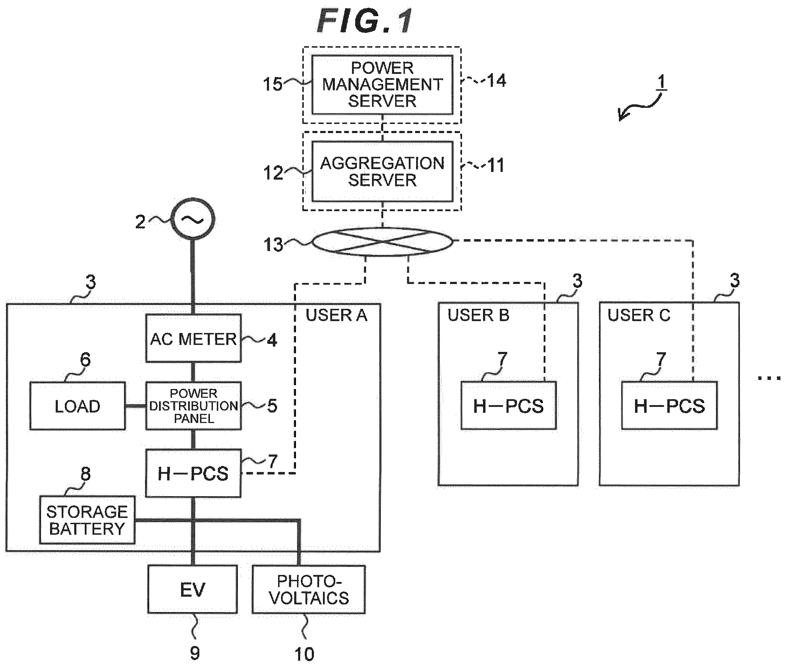

   Fig. 1 is a block diagram showing a schematic configuration of the aggregation system according to this embodiment.
[Fig. 2]

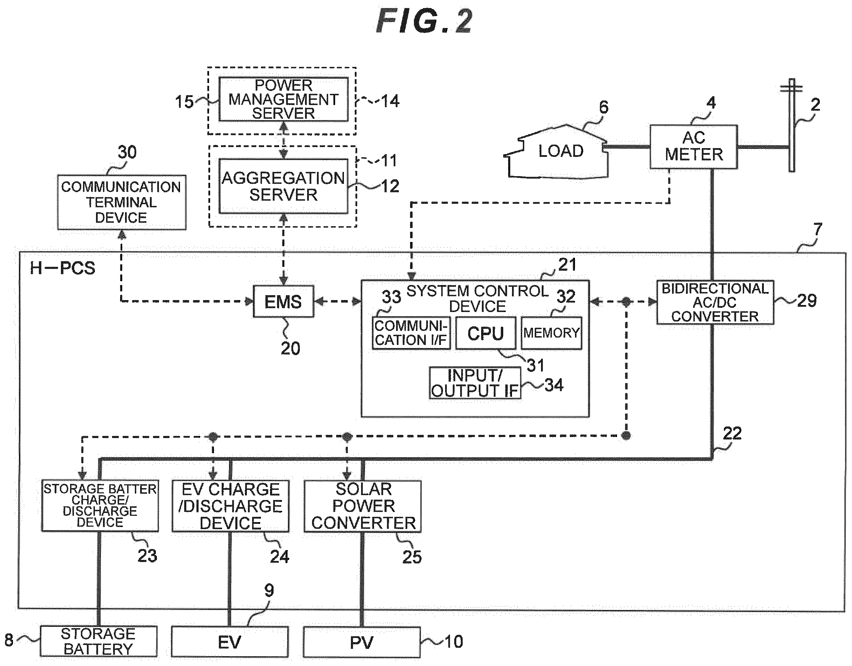

   Fig. 2 is a block diagram showing a configuration of the hybrid power conditioning system according to this embodiment.
[Fig. 3]

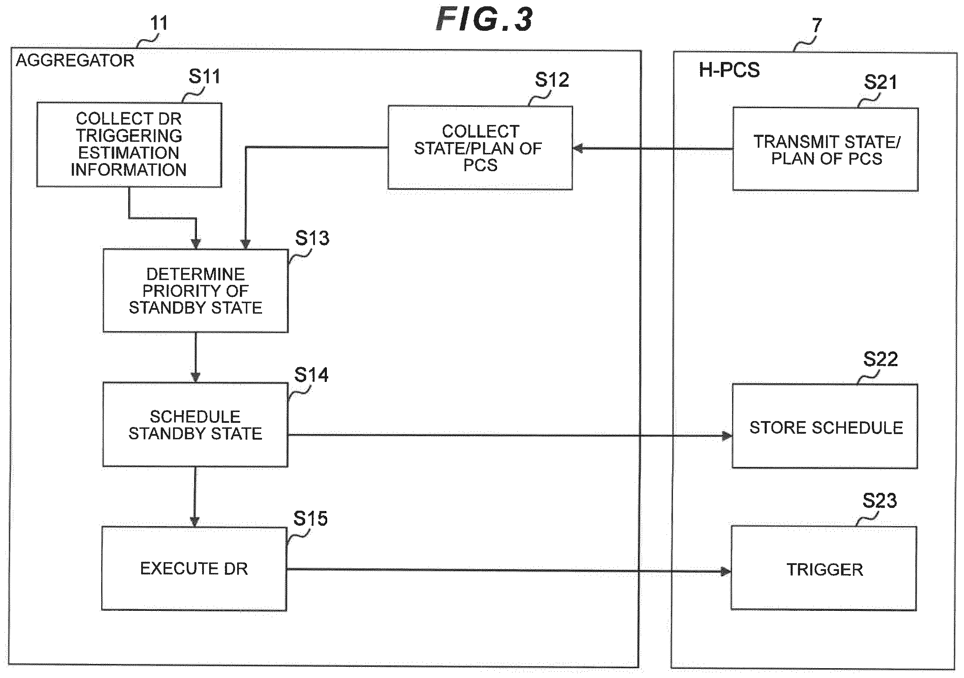

   Fig. 3 is a block diagram explaining the functions of the aggregator and the hybrid power conditioning system according to this embodiment.
[Fig. 4]

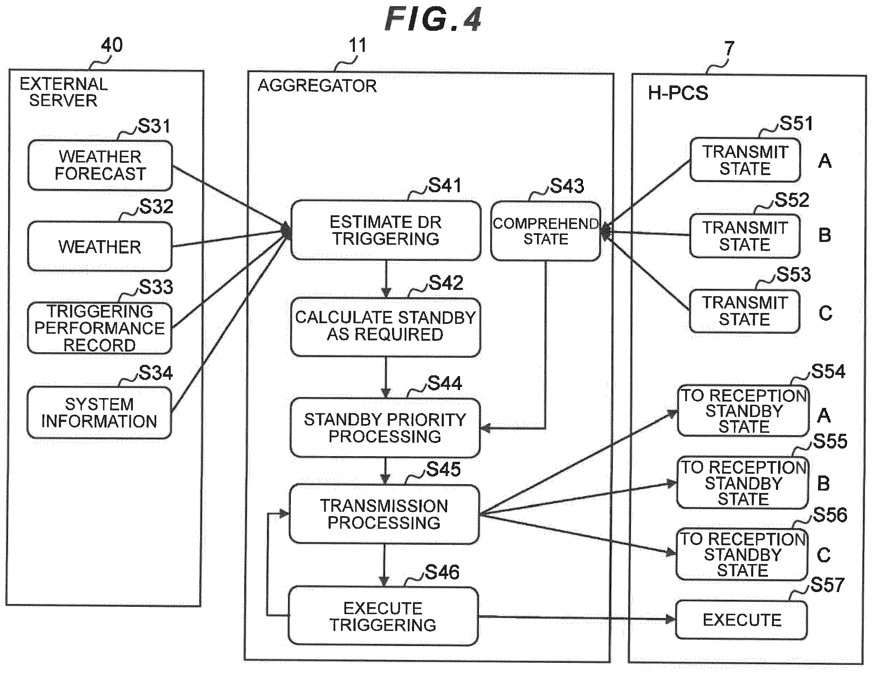

   Fig. 4 is a flowchart explaining the overall processing of the aggregation system.
[Fig. 5]

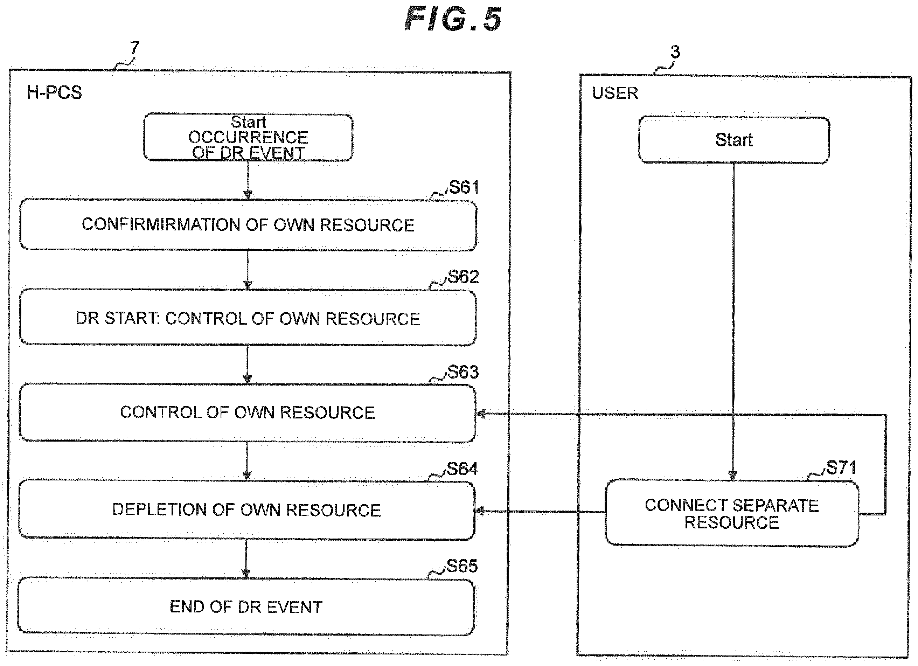

   Fig. 5 is a flowchart explaining the processing performed by the hybrid power conditioning system and the user.
[Fig. 6]

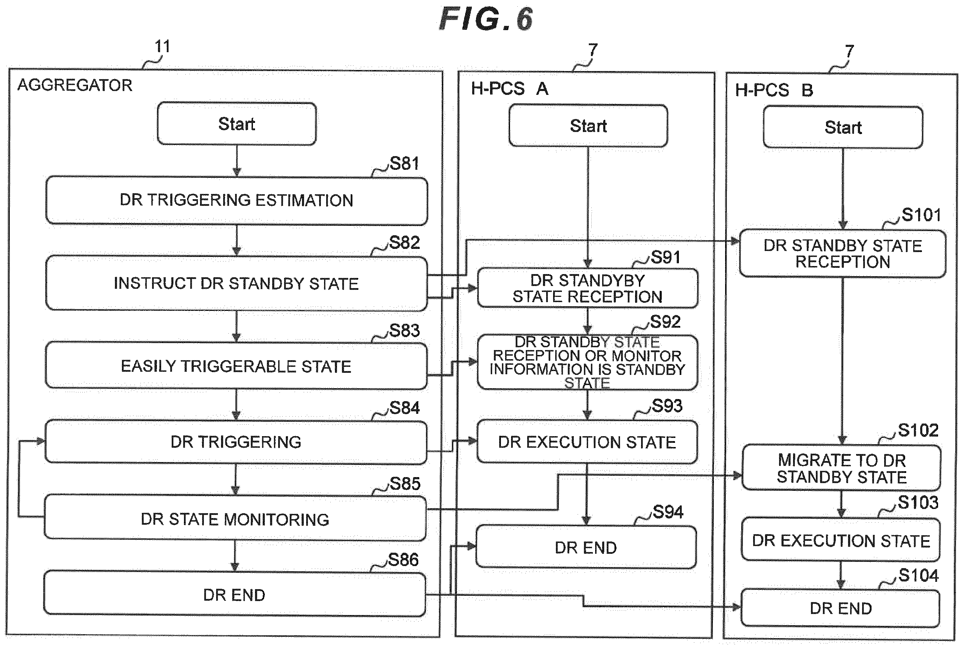

   Fig. 6 is a flowchart explaining the processing performed by the aggregator and a plurality of hybrid power conditioning systems.
[Fig. 7]

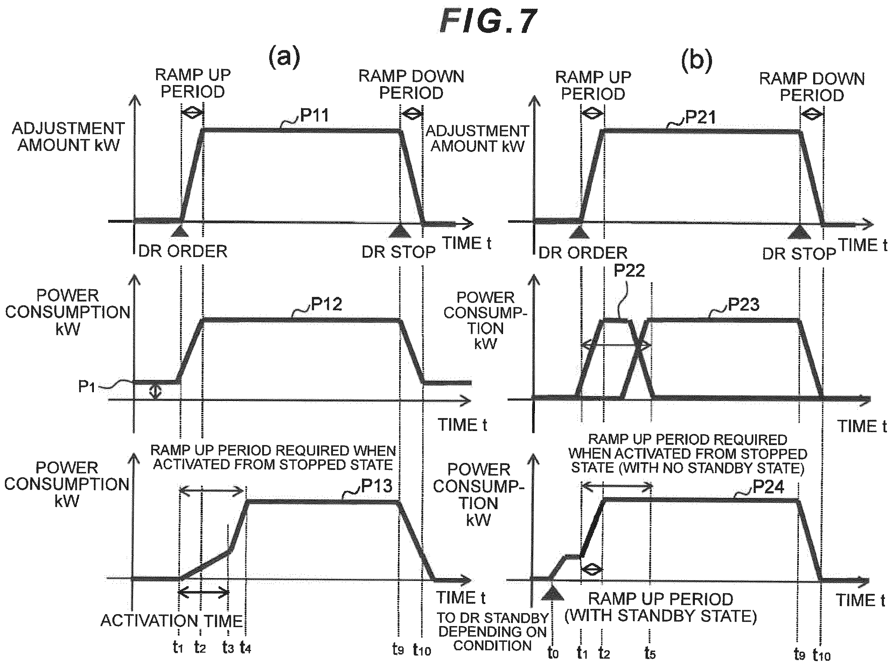

   Fig. 7 is a characteristic diagram of the adjustment amount and the power consumption for comparing the processing performed in a conventional example and the processing performed in this embodiment.
[Fig. 8]

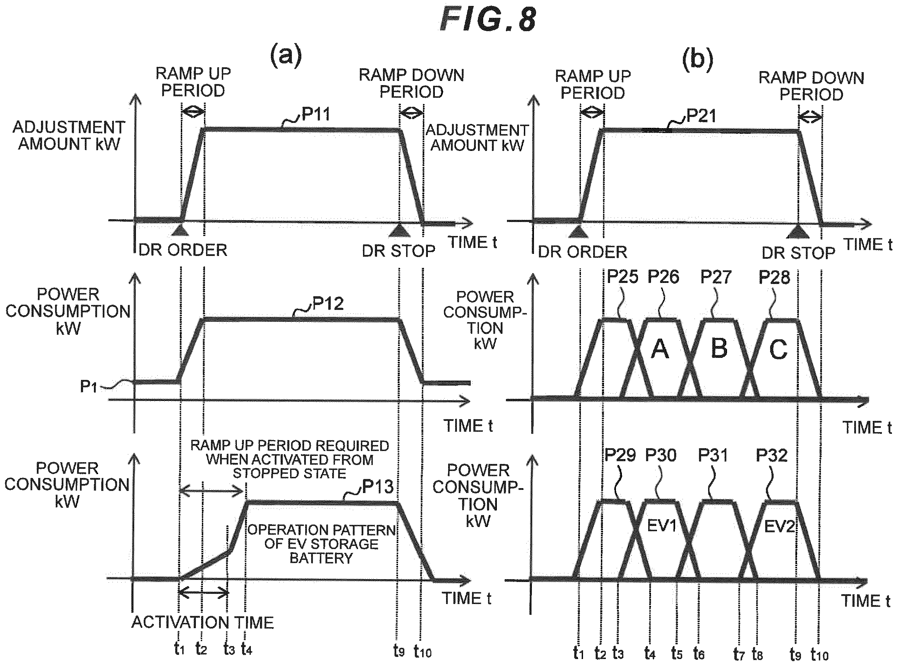

   Fig. 8 is a characteristic diagram of the adjustment amount and the power consumption for comparing the processing performed in a conventional example and the processing performed in this embodiment.

### DESCRIPTION OF EMBODIMENTS

An embodiment of the present invention is now explained in detail with reference to the appended drawings.

### (1) Configuration of aggregation system according to this embodiment

Fig. 1 is a block diagram showing a schematic configuration of the aggregation system according to this embodiment. In an aggregation system 1 shown in Fig. 1, power generated by an electric power provider 14 is transmitted to each user 3 via a system 2 configured from a transmission line and a distribution line, and the power is supplied to a load 6 of electric appliances such as lighting equipment and air conditioners of the user 3 via an AC meter 4 and a power distribution panel 5.

A hybrid power conditioning system (H-PCS: Hybrid-Power Conditioning System) 7 is connected to the power distribution panel 5 of each user 3. The hybrid power conditioning system 7 is a power conditioning system having a function of converting AC power input from the system 2 into DC power and inputting the DC power to devices capable of power storage or power generation such as a storage battery 8, an electric vehicle (EV) 9 and a photovoltaics (PV) 10 owned by the user 3 (hereinafter collectively referred to as the "electric power units"), and converting the power generated or discharged from the electric power units from DC power into AC power and outputting the AC power to the system 2.

The hybrid power conditioning system 7 of each user 3 is connected, via a network 13, to an aggregation server 12 of an aggregator 11 with which the user 3 concluded a demand response contract. Here, the hybrid power conditioning system 7 of each user 3 manages, as a control target, a plurality of electric power units (storage battery 8, electric vehicle 9, photovoltaics 10) having a different response speed of a charge or a discharge, and respectively controls a charge or a discharge of the control target and an input/output of power, to and from the system 2, based on the charge or the discharge of the control target. Among the electric power units, the storage battery 8 is a resource having the smallest capacity and the fastest response speed of charge or discharge, and the storage battery (EV storage battery) mounted on the electric vehicle 9 is a resource having a large capacity and the second fastest response speed of charge or discharge. The photovoltaics 10 is a resource that is used only for discharge.

Moreover, the aggregation server 12 is periodically (for instance, every 30 minutes) or randomly given, from a power management server 15 installed by the electric power provider 14, the power generation status of the current electric power provider 14, the future power generation plan, the current weather, the future weather forecast, and a first control order requesting the execution of a task, such as peak cut or peak shift, according to the amount of current power consumption and the anticipated amount of future power consumption. The first control order includes the period that the task is to be executed (start time and control time or end time), and the electric energy (procurement amount) to be procured (suppressed or increased) in the overall area being managed by the aggregation server 12 based on the execution of the task.

Consequently, the aggregation server 12 calculates the allocation amount of each user 3 (upper limit of the power to be input by the user 3 to the system 2 and the lower limit of the power to be output by each user 3 to the system 2) for procuring the amount of power requested in the first control order based on the first control order given from the power management server 15 and the performance record information sent from the hybrid power conditioning system 7 of each user 3.

Moreover, the aggregation server 12 designates the thus calculated allocation amount (adjustment amount) as the instruction value, and generates, for each user 3, a second control order for the user 3 to input/output, to and from the system 2, the power of the allocation amount. In other words, the aggregation server 12 functions as a server apparatus which generates a second control order as a control order in relation to a demand response to the hybrid power conditioning system 7 of each user, and, when a triggering condition is satisfied; for instance when a frequency of the system 2 deviates from a threshold, sends the generated second control order to the hybrid power conditioning system 7 of each user 3 via the network 13. Here, the second control order is added with information related to the calculated allocation amount (adjustment amount) and the control mode prescribing the discharge source or the charge destination (control information indicating the classification of charge or discharge).

Subsequently, the hybrid power conditioning system 7 that received the second control order controls the charge/discharge of the electric power units according to the second control order so that the electric energy of the power to be input/output to and from the system 2 becomes the instruction value designated in the second control order. Here, when the hybrid power conditioning system 7 receives the second control order, the hybrid power conditioning system 7 has a function as a first control device which activates each of the control targets in order from the control target having the fastest response speed, and controls the charge or discharge of each of the activated control targets according to the control order, and a function as a second control order which inputs/outputs power, to and from the system 2, based on the charge or discharge by each of the activated control targets according to the allocation amount designated in the second control order. Here, if the frequency of the system 2 deviates from the threshold (60 Hz), for example, when the frequency is 60.1 Hz and "charge" is instructed in the second control order, the hybrid power conditioning system 7 charges the control target, and, when the frequency is 59.7 Hz and "discharge" is instructed in the second control order, the hybrid power conditioning system 7 stops charging the control target and starts discharging the control target.

Accordingly, with the aggregation system 1 of this embodiment, because the hybrid power conditioning system 7 of each user 3 autonomously controls the charge/discharge of the electric power units under its control according to the second control order so that the electric energy of the power to be input/output to and from the system 2 becomes the instruction value designated in the second control order, the aggregation server 12 is not required to perform the charge/discharge control for each electric power unit of each user 3, and the load of the aggregation server 12 can be reduced by that much.

### (2) Configuration of hybrid power conditioning system

Fig. 2 is a diagram showing a configuration of the hybrid power conditioning system (H-PCS) 7 according to this embodiment. The hybrid power conditioning system 7, as shown in Fig. 2, is configured by comprising an energy management system (hereinafter referred to as the "EMS (Energy Management System)") 20 and a system control device 21, a plurality of charge/discharge devices (storage battery charge/discharge device 23 and EV charge/discharge device 24 in Fig. 2) and a power conditioning system (solar power conditioning system 25 in Fig. 2) connected via a DC (Direct Current) bus 22, and a bidirectional AC/DC (Alternating Current/Direct Current) converter 29.

The EMS 20 is a microcomputer device comprising information processing resources such as a CPU (Central Processing Unit) and a memory. The EMS 20 is equipped with a communication function of communicating with the communication terminal device 30 such as a smartphone, a tablet or a personal computer, and the aggregation server 12, and a charge/discharge control function of controlling the charge/discharge of the required electric power units by giving corresponding instructions to the system control device 21 according to the operation mode set by the user 3 (Fig. 1) via the communication terminal device 30 and the second control order given by the aggregation server 12.

Moreover, the EMS 20 is also equipped with a power consumption optimization function of controlling the charge/discharge of each electric power unit via the system control device 21 so that the power consumption condition of the user 3 will become optimal based on the voltage and frequency of the power from the system 2, and the electric power consumption, acquired from the AC meter 4, and an autonomous operation control function of performing autonomous control to cover the power consumption by using the power stored in the electric power units or the power generated by the electric power units owned by the user 3 in cases such as where the system 2 encounters a blackout.

The system control device 21 is a microcomputer which controls the operation with the bidirectional AC/DC converter 29, each charge/discharge control device (storage battery charge/discharge device 23 and EV charge/discharge device 24), and the power conditioning system (solar power conditioning system 25) based on instructions from the EMS 20, and is configured by comprising a CPU 31, a memory 32, a communication interface 33 and an input/output interface 34.

The CPU 31 is a processor which governs the operational control of the overall system control device 21. Moreover, the memory 32 is configured from a volatile or nonvolatile semiconductor memory, and is used for storing and retaining various types of programs and information. As a result of the programs stored in the memory 32 being executed by the CPU 31, various types of processing are executed as the overall system control device 21 as described later. The communication interface 33 is an interface for performing protocol control upon communicating with the EMS 20, and the input/output interface 34 is an interface for communicating with the bidirectional AC/DC converter 29, each charge/discharge device and the power conditioning system, as well as protocol control and input/output control during input/output.

Each charge/discharge device is a control device having a function of controlling the charge/discharge of the electric power unit (storage battery 8 or electric vehicle 9) having a power storage function to be within a range of 0 to 100% of its capacity according to the instruction from the system control device 21. The charge/discharge device is also equipped with a function of measuring the charge/discharge voltage value and the charge/discharge current value of the target electric power unit and notifying the result to the system control device 21, and notifying the various types of information (power storage amount, existence of error, etc.) of the electric power unit to the system control device 21.

Similarly, the power conditioning system is a control device having a function of discharging, to the DC bus 22, the power generated by the target electric power unit (photovoltaics 10 in Fig. 2) having a power generation function to be within a range of 0 to 100% according to the instruction from the system control device 21. Moreover, the power conditioning system is also equipped with a function of measuring the voltage value and the current value of the power generated by the target electric power unit and notifying the result to the system control device 21.

The bidirectional AC/DC converter 29 is a converter having a function of converting AC power provided from the system 2 into DC power and outputting the DC power to the DC bus 22, and converting DC power discharged from each charge/discharge device and the power conditioning system to the DC bus 22 into AC power and outputting the AC power to the system 2. The bidirectional AC/DC converter 29 is also equipped with a function of controlling the electric energy to be output from the DC bus 22 to the system 2 or input from the system 2 to the DC bus 22 within a range of 0 to 100% of the power flowing in the DC bus 22 or the system 2, and a function of measuring the DC voltage value and the DC current value to be input/output to and from the DC bus 22, as well as the AC voltage value, the AC current value, and the AC frequency, and notifying the result to the system control device 21.

In order to facilitate the following explanation, as shown in Fig. 1, let it be assumed that each user 3 owns a storage battery 8, an electric vehicle 9 and a photovoltaics 10 as the electric power units, and the hybrid power conditioning system 7 comprises a storage battery charge/discharge device 23 and an EV charge/discharge device 24 as the charge/discharge devices, and a solar power conditioning system 25 as the power conditioning system. In the foregoing case, a safety switch (not shown) is provided between the storage battery 8 and the storage battery charge/discharge device 23, between the electric vehicle 9 and the EV charge/discharge device 24, between the photovoltaics 10 and the solar power conditioning system 25, and between the bidirectional AC/DC converter 29 and the power distribution panel 5.

### (3) Functions of aggregator and hybrid power conditioning system

Fig. 3 is a functional block diagram explaining the functions of the hybrid power conditioning system 7 and the aggregation server 12 of the aggregator 11. In Fig. 3, the aggregation server 12 affiliated with the aggregator 11 collects DR (Demand Response) triggering estimation information from the power management server 15 (S11), and collects information related to the state/plan (state/plan of hybrid power conditioning system 7) of the PCS (Power Conditioning System) from the hybrid power conditioning system 7 of each user (S12). Here, the hybrid power conditioning system 7 of each user responds to a transmission request from the aggregation server 12, and sends information related to the PCS state/plan (operational state (in operation/suspended operation) or operation plan of the storage battery 8, electric vehicle 9, and solar power generation system 10) (S21).

Next, the aggregation server 12 determines the priority of the standby state based on the information collected respectively in steps S11, S12 (S13). For example, the priority of the standby state is determined by setting, among the hybrid power conditioning systems 7 affiliated with each user, an in-operation hybrid power conditioning system 7 as the first priority, a hybrid power conditioning system 7 having a resource (storage battery 8) of fast responsiveness (response speed of charge or discharge) as the second priority, and an operation-suspended hybrid power conditioning system 7 as the third priority. Subsequently, the aggregation server 12 schedules the standby state (S14). In other words, the aggregation server 12 schedules the timing of causing the hybrid power conditioning system 7 to enter a standby state from a stopped state based on the DR triggering estimation information. The timing of this scheduling is set to a specific timing; for instance, a timing that is several minutes before the start of triggering, or a timing in which the frequency of the system 2 will be a percentage in the vicinity of the trigger frequency (deviating frequency). Information of the schedule related to the timing of causing the hybrid power conditioning system 7 to enter a standby state from a stopped state is sent to each hybrid power conditioning system 7, and stored as information of the schedule in the memory 32 of each hybrid power conditioning system 7 (S22).

Next, the aggregation server 12 sends information related to the DR execution, such as the second control order, to the hybrid power conditioning system 7 on the condition of having received information related to the timing of DR execution from the power management server 15 (S15). The hybrid power conditioning system 7 that received the information related to DR execution performs triggering for charging or discharging the storage battery 8 based on the received information (second control order) (S23).

### (4) Overall processing of aggregation system

Fig. 4 is a flowchart explaining the overall processing of the aggregation system. In Fig. 4, the external server 40 including the power management server 15 and other servers collects information related to the weather forecast, sends the collected information related to the weather forecast to the aggregation server 12 (S31), collects information related to the weather, sends the collected information related to the weather to the aggregation server 12 (S32), sends information related to the triggering performance record stored in the storage unit of the external server 40 to the aggregation server 12 (S33), collects system information related to the system 2, and sends the collected system information to the aggregation server 12 (S34).

When the aggregation server 12 of the aggregator 11 receives various types of information sent from the external server 40, the aggregation server 12 executes DR triggering estimation based on the various types of received information (information related to the weather forecast, information related to the weather, information related to the triggering performance record, and system information) (S41), and calculates the standby as required from the execution result of the DR triggering estimation (S42). For example, the aggregation server 12 calculates the number of hybrid power conditioning systems 7 that need to stand by among the respective hybrid power conditioning systems 7 belonging to a plurality of users based on the required electric energy. Here, the aggregation server 12 requests each hybrid power conditioning system 7 to send information related to its state in order to comprehend the state (operational state or state of suspended operation) of each hybrid power conditioning system 7. In response to this request, for example, each hybrid power conditioning system 7 of users A, B, C among a plurality of users 3 sends, to the aggregation server 12, information related to the state (operational state or state of suspended operation) of the hybrid power conditioning system 7 belonging to each user (S51, S52, S53).

When the aggregation server 12 receives information related to the state (operational state or state of suspended operation) of each hybrid power conditioning system 7 from the hybrid power conditioning system 7 belonging to the respective users A, B, C, the aggregation server 12 comprehends the state (operational state or state of suspended operation) of each hybrid power conditioning system 7 based on the received information (S43).

Next, the aggregation server 12 executes standby priority processing based on the processing result of step S42 and the processing result of step S43 (S44). For example, the aggregation server 12 executes processing, based on the state of each hybrid power conditioning system 7, of setting the hybrid power conditioning system 7 of user A as the first priority when the hybrid power conditioning system 7 of user A is in operation, setting the hybrid power conditioning system 7 of user B as the second priority when equipped with a storage batter 8 of fast responsiveness as a resource belonging to the hybrid power conditioning system 7 of user B, and setting the hybrid power conditioning system 7 of user C as the third priority when the operation of the hybrid power conditioning system 7 of user C is being suspended. Subsequently, the aggregation server 12 executes transmission processing for sending information (information for entering a standby state according to the priority) including the processing result of step S44 to each user (users A, B, C) (S45).

When the hybrid power conditioning system 7 of each user A, B, C receives the information sent from the aggregation server 12, the hybrid power conditioning system 7 of each user A, B, C that received the information enters a standby state according to the priority (S54, S55, S56).

Next, when reaching the timing for triggering DR; for instance, when reaching the execution timing estimated in step S41 or the frequency of the system 2 deviates from the threshold, the aggregation server 12 executes triggering (sends the second control order) to the hybrid power conditioning system 7 of the user to be subject to triggering (S46), thereafter returns to the processing of step S45, and repeats the processing of steps S45 and S46. Here, the hybrid power conditioning system 7 of the user that received the second control order from the aggregation server 12 as a result of the triggering being executed executes a charge or a discharge based on the received second control order (S57).

### (5) Processing performed by hybrid power conditioning system and user

Fig. 5 is a flowchart explaining the processing performed by the hybrid power conditioning system and the user. In Fig. 5, when a DR event occurs, the processing in the hybrid power conditioning system 7 is started, and the hybrid power conditioning system 7 executes processing for confirming its own resources (S61). For example, the hybrid power conditioning system 7 determines whether any resource among its resources (storage battery 8, electric vehicle 9, solar power generation system 10, etc.) is in a standby state, or which resource has the fastest response speed.

Next, the hybrid power conditioning system 7 executes first control to its own resources as the processing for starting DR (S62). For example, the hybrid power conditioning system 7 activates (ramps up) the resource (storage battery 8) with the fastest response speed.

Next, the hybrid power conditioning system 7 executes second control to its own resources (S63). For example, the hybrid power conditioning system 7 activates a resource with a slow response speed (resource having a response speed that is slower than the fastest resource) and at the same time shuts down (ramps down) the resource with a fast response speed according to the output of the resource with a slow response speed. Specifically, the hybrid power conditioning system 7 activates the storage battery 8 as the resource having the fastest response speed, thereafter activates the EV storage battery (storage battery mounted on the electric vehicle 9) having a response speed that is slower than the storage battery 8 and at the same time shuts down the output (output power) of the storage battery 8 according to the output (output power) of the EV storage battery (battery).

Next, the hybrid power conditioning system 7 executes processing in cases where its own resources have been depleted (S64). For example, when the output of a resource with a slow response speed has reached its limit, an announcement is made to the user to become user 3, and a backup is requested for connecting to a different resource (electric vehicle 9). Here, the hybrid power conditioning system 7 re-activates the resource (storage battery 8) with a fast response speed to prepare for the backup. Specifically, when the output (output power) of the EV storage battery (battery) reaches its limit after the hybrid power conditioning system 7 activates the EV storage battery and lowers the output of the storage battery 8, the hybrid power conditioning system 7 requests the user to perform a backup, and re-activates the storage battery 8.

Meanwhile, the user who received the backup request connects a separate resource; for instance, the EV storage battery of another electric vehicle (EV) 9, to the hybrid power conditioning system 7, and switches the electric vehicle (EV) 9 (S71). Here, the hybrid power conditioning system 7 repeats the processing of steps S63 and S64 on the condition that the switching of the electric vehicle (EV) 9 has been executed.

Subsequently, the hybrid power conditioning system 7 executes processing of lowering the output of the resource (EV storage battery) with a slow response speed pursuant to the end of the DR event (S65), and ends the processing in this routine.

### (6) Processing performed by aggregator and a plurality of hybrid power conditioning systems

Fig. 6 is a flowchart explaining the processing performed by the aggregator and a plurality of hybrid power conditioning systems. In Fig. 6, the aggregation server 12 affiliated with the aggregator 11 executes processing of DR triggering estimation (S81). For example, the aggregation server 12 determines under what circumstances the DR was triggered from the past performance record based on information related to the triggering performance record sent from the external server 40, or determines whether it is currently an easy-to-trigger state; for example, a state in which the frequency of the system could deviate from the threshold, based on information related to the weather forecast and weather or the system information.

Next, the aggregation server 12 instructs the hybrid power conditioning system 7 of a plurality of users; for instance, users A, B, to enter a DR standby state based on the processing result of step S81 (S82). Here, when the hybrid power conditioning system 7 of the user has a DR trigger such as a frequency response, the aggregation server 12 sends the preset of the standby state (instruction value for entering a standby state when the frequency of the system 2 becomes an upward standby value or a downward standby value) to the hybrid power conditioning system 7 of users A, B.

Next, the aggregation server 12 executes processing of an easy-to-trigger situation (S83). Specifically, when the aggregation server 12 determines that it is currently an easy-to-trigger situation based on information related to the weather forecast and weather or the system information, the aggregation server 12 sends an instruction to a required number of hybrid power conditioning systems 7; for example, to the hybrid power conditioning system 7 of user A, for entering a DR standby state.

Next, the aggregation server 12 executes processing of DR triggering (S84). For example, the aggregation server 12 sends an order (second control order) to a required number of hybrid power conditioning systems 7; for example, to the hybrid power conditioning system 7 of user A, for entering a DR execution state.

Next, the aggregation server 12 executes processing of DR state monitoring (S85). For example, the aggregation server 12 sends an instruction, for performing backup, to the hybrid power conditioning system 7 of user B as a required number of hybrid power conditioning systems 7 for entering a DR standby state. Here, the aggregation server 12 returns to the processing of step S84 and repeats the processing of steps S84 and S85 when there is still a DR triggering condition as a result of the DR state monitoring, notifies the termination of DR to the hybrid power conditioning system 7 of each user when there is no longer any DR triggering condition (S86), and then ends the processing in this routine.

Meanwhile, when the hybrid power conditioning system 7 of user A receives an instruction from the aggregation server 12 for entering a DR standby state, the hybrid power conditioning system 7 of user A receives a preset of the standby state from the aggregation server 12 (S91). Moreover, when the hybrid power conditioning system 7 of user A receives an instruction from the aggregation server 12 for entering a DR standby state, or the monitor information (information related to the frequency of the system 2) resulting from the monitoring of the bidirectional AC/DC converter 29 is DR standby information; that is, when it is detected that the frequency of the system 2 has become an upward standby value or a downward standby value, the hybrid power conditioning system 7 of user A enters a DR standby state (S92). Subsequently, when the hybrid power conditioning system 7 of user A receives an order (second control order) from the aggregation server 12 for entering a DR execution state, the hybrid power conditioning system 7 of user A enters a DR execution state (S93), and, upon thereafter being notified of the termination of DR from the aggregation server 12, enters a DR termination state (S94), and then ends the processing in this routine.

Meanwhile, when the hybrid power conditioning system 7 of user B receives an instruction from the aggregation server 12 for entering a DR standby state, the hybrid power conditioning system 7 of user B receives a preset of the standby state from the aggregation server 12 (S101). Moreover, when the hybrid power conditioning system 7 of user B receives an instruction from the aggregation server 12 for entering a DR standby state, the hybrid power conditioning system 7 of user B enters a DR standby state (S102), thereafter enters a DR execution state as the processing of the DR execution state (S103), and, upon subsequently being notified of the termination of DR from the aggregation server 12, enters a DR termination state (S104), and then ends the processing in this routine.

### (7) Comparison of processing performed in conventional example and processing performed in this embodiment

Fig. 7 is a characteristic diagram of the adjustment amount and the power consumption for comparing the processing performed in a conventional example and the processing performed in this embodiment.

In the case of a conventional example, as shown in Fig. 7(a), the adjustment amount (kW) corresponding to the user's allocation amount is set to characteristic P11. Specifically, when a DR order is output at time t1, the adjustment amount (kW) gradually increases from time t1, reaches a prescribed value (maximum output) after going through a ramp up period from time t1 to time t2, is retained at a prescribed value up to the stop of DR at time t9, and decreases to zero after going through a ramp down period from time t9 to time t10. Here, in the conventional example, operation is performed according to the operation pattern as shown in characteristic P12. In other words, the operation of the power conditioning system is started from a time that is before time t1 in order to output a prescribed value (maximum output) by time t2 at which the ramp up period will lapse, the output of the power conditioning system is gradually increased from time t1 so that it will reach a prescribed value (maximum output) after going through a ramp up period from time t1 to time t2, the output of the power conditioning system is thereafter maintained to be constant for a given period of time, and the output of the power conditioning system is decreased to standby power P1 after going through a ramp down period of time t9 to time t10.

Thus, the power consumption (kW) in the conventional example will become standby power P1 earlier than time t1, and, even after going through a ramp down period from time t9 to time t10, the power consumption will remain at standby power P1. In other words, the standby power P1 is consumed wastefully in the conventional example. Moreover, in the conventional example, when operating the storage battery (EV storage battery) mounted on the electric vehicle, operation is performed according to the operation pattern as shown in characteristic P13. Here, the output of the EV storage battery is gradually increased from time t1 to time t3, the output of the EV storage battery is rapidly increased from time t3 to time t4, the output of the EV storage battery is thereafter maintained to be constant (maximum output), and the output of the EV storage battery is gradually decreased after going through a period from time t9 to time t10. Thus, time from time t1 to time t3 is required as the activation time which is required for activating the EV storage battery, and time from time t1 to time t4 is required as the ramp up period for activating the EV storage battery from a stopped state to reaching a prescribed output (maximum output), and the ramp up period will thereby become longer.

Meanwhile, in the case of this embodiment, as shown in Fig. 7(b), the adjustment amount (kW) corresponding to the user's allocation amount is set to characteristic P21. Specifically, when a DR order (second control order) is output at time t1, the adjustment amount (kW) gradually increases from time t1, reaches a prescribed value (maximum output) after going through a ramp up period from time t1 to time t2, is retained at a prescribed value up to the stop of DR at time t9, and decreases to zero after going through a ramp down period from time t9 to time t10. Here, in this embodiment, operation is performed according to the operation pattern as shown in characteristics P22, P23.

Specifically, in order to output a prescribed value (maximum output) by time t2, the storage battery 8 having the fastest response speed is activated from time t1, the output of the storage battery 8 is gradually increased by time t2, and the output of the storage battery 8 is maintained at a prescribed value (maximum output). During the process that the output of the storage battery 8 is being maintained at a prescribed value, an EV storage battery as a resource having a slower response speed than the storage battery 8 is activated, and the output of the EV storage battery is gradually increased up to time t5. During this time, the output of the storage battery 8 is gradually decreased according to the increase in the output of the EV storage battery, and the output of the storage battery 8 is decreased to zero by time t5. When the output of the EV storage battery reaches a prescribed value (maximum output) at time t5, the output of the EV storage battery is maintained at a prescribed value up to time t9. Subsequently, the output of the EV storage battery is gradually decreased from time t9 to time t10, and the operation of the EV storage battery is stopped at the point in time that the output of the EV storage battery becomes zero.

In the foregoing case, by activating the storage battery 8 having the fastest response speed without wastefully consuming the standby power, it is possible to cause the output of the storage battery 8 to reach a prescribed value (maximum output) corresponding to the adjustment amount after going through the ramp up period. Consequently, it is possible to quickly handle the demand response (frequency control), which is demanded of a fast response, and increase the electric power selling value.

Moreover, when operating only the EV storage battery, operation is performed according to the operation pattern as shown in characteristic P24. Here, the EV storage battery enters a DR standby state from time t0. In the foregoing case, the power consumption of the EV storage battery is gradually increased, and becomes the power consumption during a standby state. Subsequently, when a DR order is output at time t1, the output of the EV storage battery is gradually increased from time t1 to time t2, and the output of the EV storage battery is maintained at a prescribed value (maximum output) from time t2 to time t9. Subsequently, the output of the EV storage battery is decreased to zero after going through a ramp down period from time t9 to time t10.

By causing the EV storage battery to enter a standby state from time t0, the time from time t1 to time t2 can be used as the ramp up period, and the EV storage battery can be activated quickly. In other words, when the EV storage battery is activated without entering a standby state (when activated from a stopped state), the ramp up period will be from time t1 to time t5.

Here, the aggregation server 12 estimates a destination as a user having a control target that should enter a standby state based on at least performance record information representing past performance records and information related to an operational state of each of the users, and sends an instruction to the estimated destination for entering the standby state before sending the control order (second control order). Meanwhile, upon receiving an instruction for entering the standby state or when it is detected that a frequency of the system 2 has become a standby value, the hybrid power conditioning system 7 causes the electric power unit (9) having a second fastest response speed among the electric power units as the control target, and which is in a stopped state, to enter a standby state, and, upon receiving the control order, activates the electric power unit (9) that entered the standby state in substitute for an electric power unit (8) having a fastest response speed.

### (8) Comparison of processing performed in conventional example and processing performed in this embodiment

Fig. 8 is a characteristic diagram of the adjustment amount and the power consumption for comparing the processing performed in a conventional example and the processing performed in this embodiment.

In the case of a conventional example, as shown in Fig. 8(a), characteristic P11 of the adjustment amount and characteristics P12, P13 representing the operation pattern are respectively the same as characteristic P11 of the adjustment amount and characteristics P12, P13 representing the operation pattern shown in Fig. 7(a), and the explanation thereof is omitted.

Meanwhile, in the case of this embodiment, as shown in Fig. 8(b), the adjustment amount (kW) corresponding to the user's allocation amount is set to characteristic P21 in the same manner as Fig. 7(b). Specifically, when a DR order is output at time t1, the adjustment amount (kW) gradually increases from time t1, reaches a prescribed value (maximum output) after going through a ramp up period from time t1 to time t2, is maintained at a prescribed value up to the stop of DR at time t9, and decreases to zero after going through a ramp down period from time t9 to time t10. Here, in this embodiment, operation is performed according to the operation pattern as shown in characteristics P25 to P28, P29 to P32.

Specifically, as shown in characteristic P25, in order to output a prescribed value P11 by time t2, the storage battery 8 of user A having the fastest response speed is activated from time t1, the output of the storage battery 8 is gradually increased by time t2, and the output of the storage battery 8 is maintained at a prescribed value (maximum output). When it is determined that the state is easy to trigger the DR in the course of maintaining the output of the storage battery 8 at a prescribed value (maximum output), for instance, when the frequency of the system 2 becomes an upward standby value (60.05 Hz) or a downward standby value (59.85 Hz), in cases where the EV storage battery of user A is activated at time 3 and the output of the EV storage battery of user A is gradually increased as shown in characteristic P26, the output of the EV storage battery of user A is gradually decreased by time t4 as shown in characteristic P25. The EV storage battery of user A is maintained at a prescribed value after reaching a prescribed value (maximum output) at time t4 as shown in characteristic P26.

In this process, when the storage battery 8 of user B is activated at time t5 and the output of the storage battery 8 of user B is gradually increased as shown in characteristic P27, the output of the EV storage battery of user A is gradually decreased by time t6 as shown in characteristic P26. The storage battery 8 of user B is maintained at a prescribed value after reaching a prescribed value (maximum output) at time t6 as shown in characteristic P27.

In this process, when the storage battery 8 of user C is activated at time t7 and the output of the storage battery 8 of user C is gradually increased as shown in characteristic P28, the output of the storage battery 8 of user B is gradually decreased by time t8 as shown in characteristic P27. The output of the storage battery 8 of user C is maintained at a prescribed value after reaching a prescribed value (maximum output) at time t8 as shown in characteristic P28. Subsequently, the output of the storage battery 8 of user C is gradually decreased from time t9 to time t10 as shown in characteristic P28. When the output of the storage battery 8 of user C reaches zero at time t10, the operation of the storage battery 8 of user C is stopped.

After the storage battery 8 having the fastest response speed is activated and the output of the storage battery 8 reaches a prescribed value (maximum output), by performing, in order, the activation and shutdown of the EV storage battery of user A and the storage battery 8 of users B, C in substitute for the storage battery 8 that was initially activated, it is possible to maintain the adjustment amount with the output power of the storage battery 8 or the EV storage battery of a plurality of users.

Here, the aggregator server 12 generates triggering plan information related to a triggering plan which prescribes causing, in order, the control target in each of the users to enter a standby state, thereafter activating the control target, and thereafter shutting down the control target based on at least performance record information representing past performance records and information related to an operational state of each of the users (A, B, C), sends, in order, an instruction to each of the users for entering the standby state based on the generated triggering plan information, and sends, in order, the control order prescribing the activation and the shutdown to each of the users. Moreover, upon receiving an instruction for entering the standby state, the hybrid power conditioning system 7 of each of the users (A, B, C) causes the electric power unit as the instructed control target to enter a standby state, and, upon subsequently receiving the control order, activates and thereafter shuts down the electric power unit that entered the standby state.

Moreover, in this embodiment, operation is performed according to the operation pattern as shown in characteristics P29 to P32. Specifically, in order to output a prescribed value (maximum output) by time t2 as shown in characteristic P29, the storage battery 8 having the fastest response speed is activated from time t1, the output of the storage battery 8 is gradually increased by time t2, and the output of the storage battery 8 is maintained at a prescribed value (maximum output). When it is determined that the output of the storage battery 8 has reached its limit in the course of maintaining the output of the storage battery 8 at a prescribed value (maximum output), the EV storage battery (EV 1) of another electric vehicle 9 is connected to the EV charge/discharge device 24 in substitute for the storage battery 8, and the EV storage battery (EV 1) is activated from time t3 as shown in characteristic P30. When the EV storage battery (EV 1) is activated at time t3 and the output of the EV storage battery (EV 1) is gradually increased, the output of the storage battery 8 is gradually decreased by time t4 as shown in characteristic P29. During this time, the output of the EV storage battery (EV 1) is gradually increased, and the output of the EV storage battery (EV 1) is maintained at a prescribed value after reaching a prescribed value (maximum output) at time t4 as shown in characteristic P30.

In this process, the storage battery 8 is reactivated at time t5 and the output of the storage battery 8 is gradually increased as shown in characteristic P31 on the one hand, and the output of the EV storage battery (EV 1) is gradually decreased by time t6 as shown in characteristic P30 on the other hand. During this time, after the output of the storage battery 8 reaches a prescribed value (maximum output) a time t6 as shown in characteristic P31, the output of the storage battery 8 is maintained at a prescribed value (maximum output).

In this process, when it is determined that the output of the storage battery 8 has reached its limit, the EV storage battery (EV 2) of another electric vehicle 9 is connected to the EV charge/discharge device 24 in substitute for the storage battery 8, and the EV storage battery (EV 2) is activated from time t7 as shown in characteristic P32. When the EV storage battery (EV 2) is activated at time t7 and the output of the EV storage battery (EV 2) is gradually increased, the output of the storage battery 8 is gradually decreased by time t8 as shown in characteristic P31. After the EV storage battery (EV 2) reaches a prescribed value (maximum output) at time t8, the output of the EV storage battery (EV 2) is maintained at a prescribed value (maximum output) as shown in characteristic P32. Subsequently, the output of the EV storage battery (EV 2) is gradually decreased from time t9 to time t10. When the output of the EV storage battery (EV 2) reaches zero at time t10, the operation of the EV storage battery (EV 2) is stopped.

Here, as the resource to be initially activated, the EV storage battery of the electric vehicle 9 may be used in substitute for the storage battery 8. When it is determined that the output of the initially activated EV storage battery has reached its limit, the EV storage battery (EV 1) and the EV storage battery (EV 2) of another electric vehicle 9 may also be connected, in order, to the EV charge/discharge device 24 in substitute for the EV storage battery of the electric vehicle 9. Moreover, when it is determined that the output of the EV storage battery of the electric vehicle 9 has reached its limit, the storage battery 8 with a fast response speed may also be activated while the EV storage battery (EV 1) and the EV storage battery (EV 2) of another electric vehicle 9 are being switched in order. Furthermore, after the storage battery 8 is activated at time t1 and the output of the storage battery 8 reaches a prescribed value (maximum output), it is also possible to active the EV storage battery with a slow response speed and at the same time gradually decrease the output of the storage battery 8 according to the output of the EV storage battery, and, when it is determined that the output of the EV storage battery has reached its limit after the output of the EV storage battery reaches a prescribed value (maximum output), activate, in order, the EV storage battery (EV 1) and the EV storage battery (EV 2) of another electric vehicle 9 in substitute for the EV storage battery.

When it is determined that the output of the storage battery 8 or the EV storage battery has reached its limit, because the EV storage battery (EV 1) and the EV storage battery (EV 2) of another electric vehicle 9 are activated in order in substitute for the storage battery 8 or the EV storage battery, not only is it possible to maintain the adjustment amount based on the output power of a plurality of hybrid power conditioning systems 7, it is also possible to continue DR control for a long period,

According to this embodiment, it is possible to quickly handle a demand response (frequency control) which is demanded of a fast response, without having to consume the standby power wastefully, and thereby improve the electric power selling value.

Note that the present invention is not limited to the foregoing embodiment, and includes various modified examples. For example, the condition for outputting the control order (second control order) may be when the voltage of the system deviates from a threshold in substitute for the frequency of the system. The foregoing embodiment provided a detailed explanation for explaining the present invention in an easy-to-understand manner, and is not necessarily limited to a configuration comprising all of the components explained above. A part of the configuration of each embodiment may be added to, deleted from, or exchanged with another embodiment.

Moreover, a part or all of each of the foregoing configurations and functions may also be realized, for example, with hardware by being designed with an integrated circuit. Moreover, each of the foregoing configurations and functions may also be realized with software by a processor interpreting and executing programs capable of realizing the respective functions. Information such as programs, tables and files for realizing the respective functions may be recorded and stored in a memory, a recording device such as a hard disk or an SSD (Solid State Drive), or a recording medium such as an IC card, an SD card, or a DVD.

### REFERENCE SIGNS LIST

1 aggregation system, 3 user, 7 hybrid power conditioning system, 8 storage battery, 9 electric vehicle, 10 photovoltaics, 11 aggregator, 12 aggregation server, 14 electric power provider, 15 power management server

## Claims

1. An aggregation system, comprising:
a hybrid power conditioning system which is provided to each user and manages, as a control target, a plurality of electric power units having a different response speed of a charge or a discharge, and respectively controls a charge or a discharge of the control target and an input/output of power, to and from a system, based on the charge or the discharge of the control target; and
a server apparatus which generates a control order related to a demand response to the hybrid power conditioning system of each of the users,
wherein the server apparatus calculates an allocation amount of each of the users according to at least an amount of power to be procured, and sends, to the hybrid power conditioning system of each of the users, the control order including the calculated allocation amount and a control mode prescribing a discharge source or a charge destination when a triggering condition is satisfied,
wherein, upon receiving the control order, each of the hybrid power conditioning systems activates each of the control targets in order from the control target having a fastest response speed, controls a charge or a discharge by each of the activated control targets according to the control mode, and controls an input/output of power, to and from the system, based on the charge or the discharge of each of the activated control targets according to the allocation amount designated in the control order.

2. The aggregation system according to claim 1,
wherein, upon receiving the control order, each of the hybrid power conditioning systems activates an electric power unit having a fastest response speed among the electric power units as the control target, and subsequently activates an electric power unit having a second fastest response speed.

3. The aggregation system according to claim 2,
wherein the server apparatus estimates a destination as a user having a control target that should enter a standby state based on at least performance record information representing past performance records and information related to an operational state of each of the users, and sends an instruction to the estimated destination for entering the standby state before sending the control order, and
wherein, upon receiving an instruction for entering the standby state or when it is detected that a frequency of the system has become a standby value, each of the hybrid power conditioning systems causes an electric power unit having a second fastest response speed among the electric power units as the control target, and which is in a stopped state, to enter a standby state, and, upon receiving the control order, activates the electric power unit that entered the standby state in substitute for the electric power unit having a fastest response speed.

4. The aggregation system according to claim 1,
wherein the server apparatus generates triggering plan information related to a triggering plan which prescribes causing, in order, the control target in each of the users to enter a standby state, thereafter activating the control target, and thereafter shutting down the control target based on at least performance record information representing past performance records and information related to an operational state of each of the users, sends, in order, an instruction to each of the users for entering the standby state based on the generated triggering plan information, and sends, in order, the control order prescribing the activation and the shutdown to each of the users, and
wherein, upon receiving an instruction for entering the standby state, each of the hybrid power conditioning systems causes the electric power unit as the instructed control target to enter a standby state, and, upon subsequently receiving the control order, activates and thereafter shuts down the electric power unit that entered the standby state.

5. The aggregation system according to claim 2,
wherein, upon receiving the control order, each of the hybrid power conditioning systems repeats a process of activating an electric power unit having a fastest response speed among the electric power units as the control target, thereafter activating an electric power unit having a second fastest response before shutting down the electric power unit having the fastest response speed, and thereafter activating the electric power unit having the fastest response speed before shutting down the electric power unit having the second fastest response speed, and, when activating the electric power unit have the second fastest response speed before shutting down the electric power unit having the fastest response speed, activating an electric power unit that is different from the activated electric power unit having the second fasted response speed and which has a second fastest response speed.

6. The aggregation system according to claim 1,
wherein the server apparatus determines that the triggering condition has been satisfied when a frequency of the system has deviated from a threshold, and sends the control order to the hybrid power conditioning system of each of the users.

7. A control method of an aggregation system,
wherein the aggregation system includes:
a hybrid power conditioning system which is provided to each user and manages, as a control target, a plurality of electric power units having a different response speed of a charge or a discharge, and respectively controls a charge or a discharge of the control target and an input/output of power, to and from a system, based on the charge or the discharge of the control target; and
a server apparatus which generates a control order related to a demand response to the hybrid power conditioning system of each of the users, and
wherein the control method comprises:
a first step of the server apparatus calculating an allocation amount of each of the users according to at least an amount of power to be procured, and sending, to the hybrid power conditioning system of each of the users, the control order including the calculated allocation amount and a control mode prescribing a discharge source or a charge destination when a triggering condition is satisfied; and
a second step of each of the hybrid power conditioning systems, upon receiving the control order, activating each of the control targets in order from the control target having a fastest response speed, controlling a charge or a discharge by each of the activated control targets according to the control mode, and controlling an input/output of power, to and from the system, based on the charge or the discharge of each of the activated control targets according to the allocation amount designated in the control order.

8. The control method of an aggregation system according to claim 7,
wherein, in the second step, upon receiving the control order, each of the hybrid power conditioning systems activates an electric power unit having a fastest response speed among the electric power units as the control target, and subsequently activates an electric power unit having a second fastest response speed.

9. The control method of an aggregation system according to claim 8, further comprising:
a third step of the server apparatus estimating a destination as a user having a control target that should enter a standby state based on at least performance record information representing past performance records and information related to an operational state of each of the users, and sending an instruction to the estimated destination for entering the standby state before sending the control order; and
a fourth step of each of the hybrid power conditioning systems, upon receiving an instruction for entering the standby state or when it is detected that a frequency of the system has become a standby value, causing an electric power unit having a second fastest response speed among the electric power units as the control target, and which is in a stopped state, to enter a standby state, and, upon receiving the control order, activating the electric power unit that entered the standby state in substitute for the electric power unit having a fastest response speed.

10. The control method of an aggregation system according to claim 7, further comprising:
a third step of the server apparatus generating triggering plan information related to a triggering plan which prescribes causing, in order, the control target in each of the users to enter a standby state, thereafter activating the control target, and thereafter shutting down the control target based on at least performance record information representing past performance records and information related to an operational state of each of the users, sending, in order, an instruction to each of the users for entering the standby state based on the generated triggering plan information, and sending, in order, the control order prescribing the activation and the shutdown to each of the users; and
a fourth step of each of the hybrid power conditioning systems, upon receiving an instruction for entering the standby state, causing the electric power unit as the instructed control target to enter a standby state, and, upon subsequently receiving the control order, activating and thereafter shutting down the electric power unit that entered the standby state.

11. The control method of an aggregation system according to claim 8,
wherein, in the second step, upon receiving the control order, each of the hybrid power conditioning systems repeats a process of activating an electric power unit having a fastest response speed among the electric power units as the control target, thereafter activating an electric power unit having a second fastest response before shutting down the electric power unit having the fastest response speed, and thereafter activating the electric power unit having the fastest response speed before shutting down the electric power unit having the second fastest response speed, and, when activating the electric power unit have the second fastest response speed before shutting down the electric power unit having the fastest response speed, activating an electric power unit that is different from the activated electric power unit having the second fasted response speed and which has a second fastest response speed.

12. The control method of an aggregation system according to claim 7,
wherein the server apparatus determines that the triggering condition has been satisfied when a frequency of the system has deviated from a threshold, and sends the control order to the hybrid power conditioning system of each of the users.

13. A hybrid power conditioning system, comprising:
a first control device which manages, as a control target, a plurality of electric power units having a different response speed of a charge or a discharge, and controls a charge or a discharge of the control target; and
a second control device which controls an input/output of power, to and from a system, based on the charge or the discharge of the control target,
wherein, upon receiving a control order related to a demand response including a control mode prescribing an allocation amount of power and a discharge source or a charge destination from a higher-order server apparatus, the first control device activates the control targets in order from the control target having a fastest response speed, and controls a charge or a discharge by the activated control target according to the control mode, and
wherein the second control device controls an input/output of power, to and from the system, based on the charge or the discharge of the activated control target according to the allocation amount designated in the control order.

14. The hybrid power conditioning system according to claim 13,
wherein, upon receiving the control order, the first control device activates an electric power unit having a fastest response speed among the electric power units as the control target, and subsequently activates an electric power unit having a second fastest response speed.

15. The hybrid power conditioning system according to claim 14,
wherein, upon receiving an instruction from the server apparatus for entering the standby state or when it is detected that a frequency of the system has become a standby value, the first control device causes an electric power unit having a second fastest response speed among the electric power units as the control target, and which is in a stopped state, to enter a standby state, and, upon receiving the control order, activates the electric power unit that entered the standby state in substitute for an electric power unit having a second fastest response speed.
